# EUROPÄISCHE PATENTSCHRIFT

(11) **EP 3 925 725 B1**
(45) Veröffentlichungstag und Bekanntmachung des Hinweises auf die Patenterteilung: **17.05.2023**
(21) Anmeldenummer: 20180280.8
(22) Anmeldetag: 16.06.2020
(51) Int. Cl.: B23K 20/10, B29C 65/08, B23K 37/00

(54) **AMBOSS, AMBOSSTRÄGER UND ULTRASCHALL-SCHWEISSEINRICHTUNG**
ANVIL, ANVIL SUPPORT AND ULTRASONIC WELDING DEVICE
ENCLUME, SUPPORT D'ENCLUME ET DISPOSITIF DE SOUDAGE PAR ULTRASONS

(43) Veröffentlichungstag der Anmeldung: 22.12.2021
(73) Patentinhaber: Novatec GmbH Innovative Technologie, 65795 Hattersheim (DE)
(72) Erfinder: Fink, Daniel, 65428 Rüsselsheim (DE); Bingel, Markus, 61130 Nidderau (DE); Skledar, Boris, 65527 Niedernhausen (DE)
(74) Vertreter: Herrmann, Daniel

(56) Entgegenhaltungen:
- DE-A1-102016 117 908
- DE-B3- 10 330 431
- DE-U1-202015 008 931
- US-A1- 2011 284 169

## Beschreibung

### Technisches Gebiet

Die hier beschriebene Erfindung betrifft einen Amboss für eine Ultraschall-Schweißeinrichtung, einen Ambossträger für eine Ultraschall-Schweißeinrichtung und eine Ultraschall-Schweißeinrichtung.

### Hintergrund

US 2011/284169 A1 (beschreibend alle Merkmale des Oberbegriffs der Ansprüche 1, 5 und 11) offenbart: Eine Ultraschallschweißanordnung mit einem Ultraschallhorn und einem Amboss mit ersten, zweiten und dritten Plattenabschnitten wird bereitgestellt. Der dritte Plattenabschnitt ist zwischen den ersten und den zweiten Plattenabschnitt gekoppelt. Der erste Plattenabschnitt hat einen ersten gerändelten Bereich auf einer ersten Seite, die in der Nähe des Ultraschallhorns angeordnet ist, und der zweite Plattenabschnitt hat einen zweiten gerändelten Bereich auf einer zweiten Seite. Der dritte Plattenabschnitt hat eine erste Öffnung, die sich dadurch erstreckt. Die Anordnung umfasst eine Halterung, die die zweite Seite des Amboss aufnimmt, um den Amboss daran zu halten. Die Halterung hat eine zweite Öffnung, die mit der ersten Öffnung ausgerichtet ist, so dass ein Kopplungselement, das sich durch die erste und die zweite Öffnung erstreckt, den Amboss entfernbar mit der Halterung koppelt.

DE 20 2015 008931 U1 beschreibt: Eine Ultraschall-Schweißzange zur Ausführung einer Ultraschall-Schweißung an einem rohrförmigen elektrisch leitenden Schweißmedium mit einem ersten Zangenteil und einem relativ zum ersten Zangenteil bewegbaren zweiten Zangenteil, wobei das erste Zangenteil eine durch eine Ultraschallschwingungen übertragende Sonotrode gebildete erste Schweißbacke und das zweite Zangenteil eine durch einen Amboss gebildete zweite Schweißbacke aufweist, dadurch gekennzeichnet, dass die erste oder die zweite Schweißbacke sowie eine einen zwischen den Schweißbacken gebildeten Schweißmedium-Aufnahmeraum begrenzende Schweißmedium-Anschlageinrichtung jeweils elektrisch leitend ausgebildet und voneinander elektrisch isoliert angeordnet sind, wobei die elektrisch leitende Schweißbacke sowie die elektrisch leitende Schweißmedium-Anschlageinrichtung Komponenten eines Sicherheitsschaltkreises ausbilden, derart, dass eine Auslösung eines Schweißvorgangs mit einem Schließvorgang der Schweißbacken nach Schließen des Sicherheitsschaltkreises durch Herstellen eines elektrischen Kontakts zwischen der elektrisch leitenden Schweißbacke und der Schweißmedium-Anschlageinrichtung mittels des Schweißmediums erfolgt.

DE 10 2016 117 908 A1 beschreibt: Eine Ultraschall-Sonotrodenspitze für eine Ultraschall-Sonotrode eines Ultraschall-Rohrverschließers hat einen Körper mit einer Vielzahl von Seiten. Mindestens eine der Seiten hat ein Paar räumlich beabstandeter Schweißwerkzeuge, das ausgebildet ist, einen Bereich eines Rohres zu kontaktieren, die an mindestens zwei Stellen entlang des Rohres verschlossen wird, welche voneinander beabstandet sind, wenn das Paar von Schweißwerkzeugen das Rohr kontaktiert. Ein Amboss für einen Ultraschall-Rohrverschließer umfasst einen Körper, der ein Paar räumlich beabstandeter Schweißklötze aufweist, die ausgebildet sind, einen Bereich eines Rohres zu kontaktieren, der an zwei Stellen entlang des Rohres verschweißt wird, welche voneinander beabstandet sind, wenn der Amboss das Rohr kontaktiert. Ein Werkzeugsatz für einen Ultraschall-Rohrverschließer umfasst die vorangehende Ultraschall-Sonotrodenspitze und den Amboss.

Bekannte, als Schweißzange ausgeführte Ultraschall-Schweißeinrichtungen, weisen einen auf einem Ambossträger austauschbar angeordneten Amboss auf. Dieser Amboss ist mittels einer Schraubverbindung, die eine als Normalkraft zwischen einer Stützfläche des Ambossträgers und einer Auflagerfläche des Amboss wirkende Vorspannkraft erzeugt, in einer Verbindungsebene zwischen der Auflagerfläche des Amboss und der Stützfläche des Ambossträgers fixiert gehalten. Diese Fixierung soll verhindern, dass Längsschwingungen der Sonotrode in Richtung der Haupt-Schwingungsrichtung der Sonotrode, die durch die Auflagerfläche des Amboss auf die Stützfläche des Ambossträgers übertragen werden, zu Relativbewegungen zwischen dem Amboss und dem Ambossträger in Richtung der Haupt-Schwingungsrichtung der Sonotrode führen. Ein Auftreten derartiger Relativbewegungen könnte ansonsten dazu führen, dass der gewünschte Ultraschall-Schweißvorgang nicht verlässlich durchgeführt werden kann und es zwischen dem Amboss und dem Ambossträger in der Verbindungsebene zu lokalen Verschweißungen kommt, die eine für den wartungsbedingten Austausch des Amboss notwendige Trennung des Amboss vom Ambossträger verhindern würden.

Der allgemeine Wunsch nach energieeffizienteren elektrischen Geräten, wie zum Beispiel Kühlschränke, hat dazu geführt, dass mehr Isoliermaterial in solche Geräte eingebaut wird, wodurch weniger Platz in solchen Geräten für das Ultraschall-Verschweißen, beispielsweise von Metallröhrchen, verbleibt. Dies erfordert kleinere Ultraschall-Schweißeinrichtungen, insbesondere mit einer kompakteren Anordnung von Amboss und Ambossträger.

In der Praxis hat sich nun herausgestellt, dass es bei einer Miniaturisierung des Ambosses und entsprechend klein dimensionierter Schraubverbindung zwischen dem Amboss und dem Ambossträger nicht möglich ist, eine ausreichende Vorspannkraft zwischen dem Amboss und dem Ambossträger zu erzeugen, um eine verlässliche Halterung des Ambosses auf dem Ambossträger und die Unterdrückung der unerwünschten Relativbewegungen zwischen dem Amboss und dem Ambossträger zu gewährleisten.

### Kurzbeschreibung der Erfindung

Die vorliegende Erfindung betrifft daher die Aufgabe, einen Amboss, Ambossträger und eine Ultraschall-Schweißeinrichtung zu realisieren, die ein verlässliches Ultraschall-Schweißen auch in kleineren Räumen erlaubt.

Diese Aufgabe wird gelöst jeweils durch einen Amboss gemäß des unabhängigen Anspruch 1, durch ein Ambossträger gemäß Anspruch 5, und durch eine Ultraschall-Schweißeinrichtung gemäß Anspruch 11. Bevorzugte Ausführungsformen sind in den weiteren Ansprüchen beschrieben.

Während des Ultraschall-Schweißens wird ein Amboss, üblicherweise automatisch, in Richtung Sonotrode nachgeführt und gegen die Sonotrode gedrückt, sodass eine Normalkraft seitens der Sonotrode auf die Arbeitsfläche des Amboss einwirkt und Energie auf den Amboss übertragen wird. Während das Ultraschall-Schweißen am stärksten ist, ist die Normalkraft und die Energieübertragung auf den Amboss am größten und es besteht die größte Gefahr, dass der Amboss nicht stabil auf dem Ambossträger sitzt und die unerwünschte Bewegung relativ zum Ambossträger ausführt.

Dadurch, dass die Auflagerfläche des erfindungsgemäßen Amboss zwei Abschnitte zum Aufliegen des Ambosses auf einer auf einem Ambossträger ausgebildeten Stützfläche aufweist, wobei die zwei Abschnitte zumindest teilweise in einem zwischen den zwei Abschnitten liegenden Zwischenraum einen Winkel von weniger als 180° einschließen, ist der Amboss ausgestaltet während des Ultraschall-Schweißen sich selbst auf der Stützfläche des Ambossträgers zu fixieren. Diese Ausgestaltung des erfindungsgemäßen Ambosses führt dazu, dass die Normalkraft ein oder mehrere an den Amboss angreifende Rückstellkräfte bewirkt, die ein oder mehrere Relativbewegungen zwischen dem Amboss und dem Ambossträger entgegenwirken. Diese selbstfixierende Wirkung ist dadurch umso größer, je mehr Normalkraft bzw. Energieübertragung auf den Amboss gegeben ist. Mit anderen Worten ist die selbstfixierende Wirkung genau dann am größten, wenn sie auch meisten benötigt wird, nämlich dann, wenn das Ultraschall-Schweißen am stärksten ist, was besonders vorteilhaft für ein verlässliches Ultraschall-Schweißen und die Beständigkeit von Amboss und Ambossträger ist.

Diese Anpassung des Ambosses für eine Selbstfixierung erlaubt eine Miniaturisierung des Befestigungsmittel, wie zum Beispiel der oben beschriebenen Schraube, des Ambosses auf dem Ambossträger, da die selbstfixierende Wirkung Last von dem Befestigungsmittel nimmt, und erlaubt sogar, dass der Amboss ohne jegliches zusätzliches Befestigungsmittel (z.B. Schraube) auf dem Ambossträger während des Ultraschall-Schweißvorgangs verlässlich fixiert ist. Die selbstfixierende Wirkung verringert somit die Relativbewegung zwischen Amboss und Ambossträger in Richtung der Haupt-Schwingungsrichtung der Sonotrode während des Ultraschall-Schweißvorgangs gerade auch bei kompakten Anordnungen von Amboss, Sonotrode und Ambossträger und ermöglicht das verlässliche Ultraschall-Schweißen in kleinen Räumen.

Ein zusätzlicher technischer Vorteil ist, dass aufgrund der selbstfixierenden Wirkung auch eine Verringerung der Relativbewegung zwischen Amboss und Ambossträger in Richtung transversal zur Haupt-Schwingungsrichtung der Sonotrode erzielt wird (weniger Querbewegung), was ein Aufrauen der Auflagerfläche und/oder der Stützfläche zum Zweck einer solchen Verringerung nicht mehr nötig macht.

Dadurch, dass die Stützfläche des Ambossträgers zwei Abschnitte aufweist, wobei die zwei Abschnitte zumindest teilweise in einem zwischen den zwei Abschnitten liegenden Zwischenraum einen Winkel von mehr als 180° einschließen, ist der Ambossträger ausgestaltet mit dem oben beschriebenen erfindungsgemäßen selbstfixierenden Amboss verwendet zu werden und befördert die oben beschriebene selbstfixierende Wirkung. Die im Zusammenhang mit dem Amboss beschriebenen Vorteile gelten somit ebenfalls für den erfindungsgemäßen Ambossträger.

Der erfindungsgemäße Amboss und der erfindungsgemäße Ambossträger sind somit jeweils speziell ausgestaltet für eine Verwendung in einem selbstfixierenden System umfassend Amboss und Ambossträger, wobei der erfindungsgemäße Amboss und der erfindungsgemäße Ambossträger angepasst sind zusammen zu wirken und realisieren komplementäre Aspekte derselben erfinderischen Idee mit den oben beschriebenen technischen Vorteilen.

Besonders bevorzugte Ausführungsformen dieser Erfindung weisen auf ein oder mehreren der Abschnitte der Auflagerfläche und/oder der Stützfläche Oberflächenstrukturen auf, die die zwischen Auflagerfläche und Stützfläche wirkende Reibung, und somit auch die oben beschriebene selbstfixierende Wirkung, erhöhen. Im Falle von komplementären Oberflächenstrukturen auf aneinander angrenzenden und sich berührenden Abschnitten der Auflagerfläche und der Stützfläche ist zudem ein Formschluss zwischen Auflagerfläche und Stützfläche, und damit zwischen Amboss und Ambossträger, möglich. Diese optionalen zusätzlichen Merkmale dieser besonders bevorzugten Ausführungsformen verringern zusätzlich die oben beschriebenen Relativbewegungen zwischen Amboss und Ambossträger parallel zur Haupt-Schwingungsrichtung der Sonotrode und/oder transversal zur Haupt-Schwingungsrichtung der Sonotrode.

### Kurzbeschreibung der Zeichnungen

Figur 1 zeigt eine erfindungsgemäße Ultraschall-Schweißeinrichtung umfassend einen erfindungsgemäßen Amboss und einen erfindungsgemäßen Ambossträger, sowie eine Sonotrode. Die Figur gibt auch die Haupt-Schwingungsrichtung der Sonotrode an.
Figur 2 zeigt einen Querschnitt durch einen erfindungsgemäßen Amboss.
Figur 3 zeigt eine dreidimensionale Darstellung eines erfindungsgemäßen Ambosses, wobei die Ebene, durch die der Querschnitt gemäß Figur 2 erstellt wird, in Figur 3 angegeben ist.
Figur 4 zeigt eine dreidimensionale Darstellung eines erfindungsgemäßen Ambossträgers.
Figur 5 zeigt eine Seitenansicht eines erfindungsgemäßen Ambossträgers und eines erfindungsgemäßen Ambosses, der auf dem erfindungsgemäßen Ambossträger angeordnet ist.
Figur 6 zeigt eine nähere Seitenansicht auf den erfindungsgemäßen Ambossträger mit dem darauf angeordneten erfindungsgemäßen Amboss, wobei zusätzlich die Sonotrode der Ultraschall-Schweißeinrichtung dargestellt ist. Die Figur zeigt ferner die Haupt-Schwingungsrichtung der Sonotrode, sowie die Normalkraft und eine durch die Normalkraft bewirkte Rückstellkraft, die auf den Amboss wirkt.
Figur 7 zeigt eine dreidimensionale Darstellung des erfindungsgemäßen Ambossträgers und des auf dem Ambossträger angeordneten erfindungsgemäßen Amboss, sowie die Normalkraft und eine auf den Amboss wirkende und durch die Normalkraft bewirkte Rückstellkraft. Ferner zeigt die Figur ein optionales Befestigungsmittel in Form einer Schraube.
Figur 8 zeigt eine seitliche Nahaufnahme eines erfindungsgemäßen Ambossträgers und eines erfindungsgemäßen Ambosses, wobei der Amboss auf der Auflagerfläche eine Oberflächenstruktur aufweist.
Figur 9 zeigt eine seitliche Nahaufnahme eines erfindungsgemäßen Ambossträgers und eines erfindungsgemäßen Ambosses, wobei der Amboss auf der Auflagerfläche eine andere Oberflächenstruktur aufweist.

### Detaillierte Beschreibung

Erfindungsgemäß wird vorgeschlagen, einen Amboss (1) für eine Ultraschall-Schweißeinrichtung (100) bereitzustellen. Erfindungsgemäß wird ferner vorgeschlagen, einen Ambossträger (10) für eine Ultraschall-Schweißeinrichtung (100) bereitzustellen.

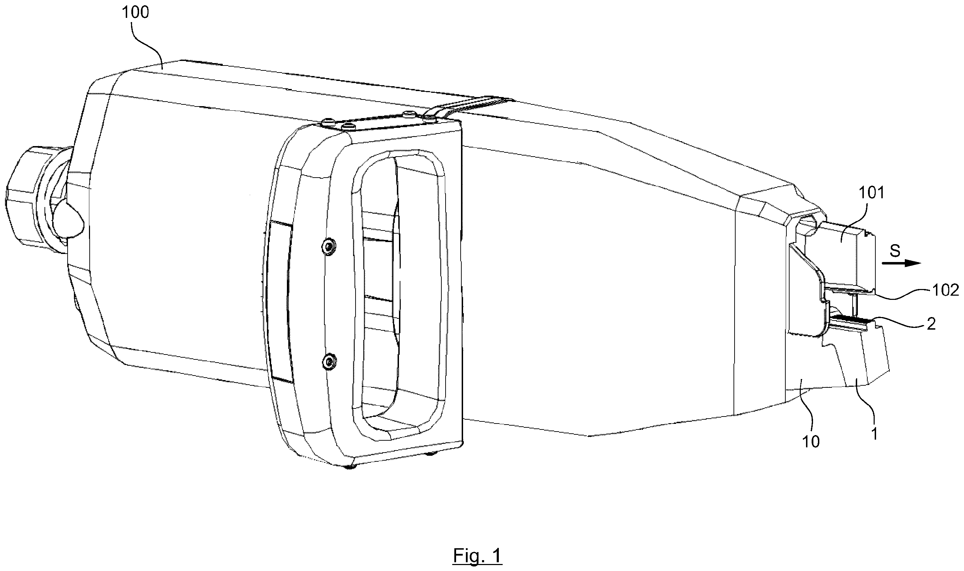

Figur 1 zeigt eine erfindungsgemäße Ultraschall-Schweißeinrichtung (100) umfassend einen erfindungsgemäßen Amboss (1) und einen erfindungsgemäßen Ambossträger (10), sowie eine Sonotrode (101). Die Figur gibt auch die Haupt-Schwingungsrichtung (S) und die mit der Arbeitsfläche (2) des Amboss (1) zusammenwirkende Gegenfläche (102) der Sonotrode (101) an.

Die Arbeitsfläche (2) kann während des Ultraschall-Schweißens durch die Ultraschall-Schweißeinrichtung (100) eine zur Sonotrode (101), insbesondere zur Gegenfläche (102), der Ultraschall-Schweißeinrichtung (100) ausgerichtete Oberfläche des Amboss (1) sein.

Die Ultraschall-Schweißeinrichtung hat üblicherweise einen Griff mit dem diese durch den Benutzer zu dem Raum gesteuert werden kann, indem das zu verschweißende Objekt, zum Beispiel Metallröhrchen, mittels Ultraschall-Schweißen zu verschweißen ist. Das zu verschweißende Objekt wird zwischen Arbeitsfläche (2) und Gegenfläche (102) gelegt und der Amboss (1) wird gegen die Sonotrode (101) geführt und an sie gedrückt während das Objekt mittels Longitudinalschwingung der Sonotrode (201) in Haupt-Schwingungsrichtung (S) der Sonotrode verschweißt wird. Durch ein solches Ultraschall-Schweißen können Röhrchen fluiddicht verschweißt werden.

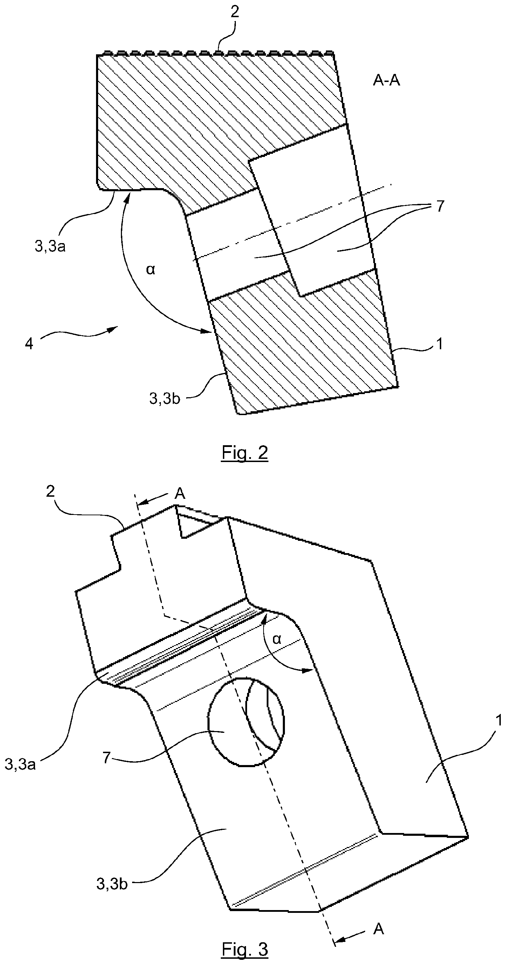

Figur 2 zeigt einen Querschnitt durch einen erfindungsgemäßen Amboss (1). Figur 3 zeigt eine dreidimensionale Darstellung des erfindungsgemäßen Ambosses (1), wobei die Ebene, durch die der Querschnitt gemäß Figur 2 erstellt wird, in Figur 3 mit den beiden Pfeilen und der gestrichelten Linie angegeben ist.

Der erfindungsgemäße Amboss (1) ist für die Ultraschall-Schweißeinrichtung (100) geeignet, und der Amboss (1) umfasst: eine auf dem Amboss (1) ausgebildete Arbeitsfläche (2) zum Aufliegen eines mittels Ultraschallschwingungen zu schweißenden Objekts; und eine an dem Amboss (1) ausgebildete Auflagerfläche (3); wobei die Auflagerfläche (3) zwei Abschnitte (3a, 3b) zum Aufliegen des Amboss (1) auf einer auf einem Ambossträger (10) ausgebildeten Stützfläche (11) aufweist, wobei die zwei Abschnitte (3a, 3b) zumindest teilweise in einem zwischen den zwei Abschnitten (3a, 3b) liegenden Zwischenraum (4) einen Winkel (a) von weniger als 180° einschließen. Der erfindungsgemäße Amboss (1) kann mit jeder beliebigen und beliebig vielen der hier im Folgenden beschriebenen optionalen Merkmale kombiniert werden.

Der Zwischenraum (4) liegt entsprechend der Erfindung außerhalb des Amboss (1). Der Zwischenraum (4) ist bevorzugt ausgebildet, einen Teil des Ambossträgers (10) und dessen Stützfläche (11) zu empfangen.

Der Winkel α weist entsprechend der Erfindung irgendeinen Wert von X2=135° bis Y2=95° oder von X3=95° bis Y3=45° auf.

Einer der zwei Abschnitte (3a, 3b) kann zumindest teilweise geradlinig ausgestaltet ist oder beide der zwei Abschnitte (3a, 3b) können zumindest teilweise geradlinig ausgestaltet sein. Die Auflagerfläche (3) ist eine sich von der Arbeitsfläche (2) unterscheidende Oberfläche des Amboss (1). Die Auflagerfläche (3) kann während des Ultraschall-Schweißens durch die Ultraschall-Schweißeinrichtung (100) eine von der Sonotrode (101) der Ultraschall-Schweißeinrichtung (100) abgewandten Oberfläche des Amboss (1) sein.

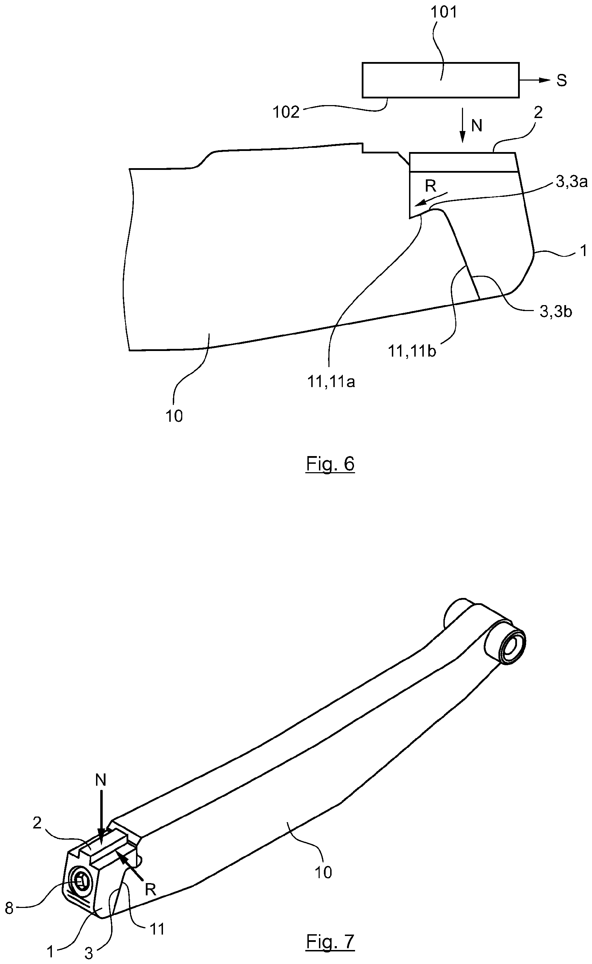

Der Amboss (1) kann optional eine durch den Amboss hindurchgehende Bohrung (7) zur Befestigung eines Befestigungsmittel aufweisen, wobei das Befestigungsmittel eine, wie in Figur 7 dargestellte, Schraube sein kann. Alternativ kommen als Befestigungsmittel auch Stifte oder Klammern infrage.

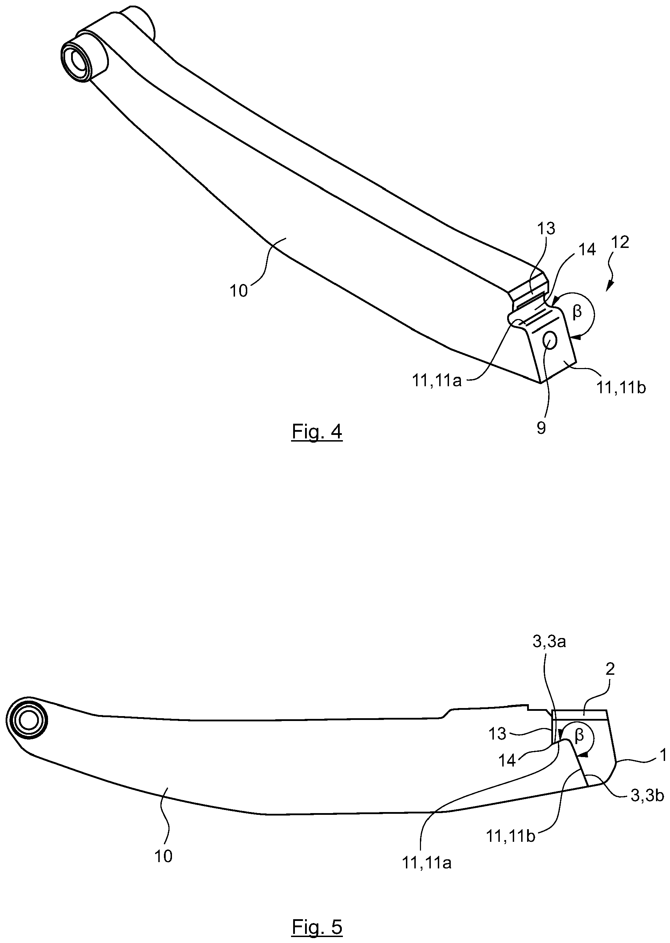

Figur 4 zeigt eine dreidimensionale Darstellung eines erfindungsgemäßen Ambossträgers (10). Figur 5 zeigt eine Seitenansicht des erfindungsgemäßen Ambossträgers (10) und des erfindungsgemäßen Ambosses (1), der auf dem erfindungsgemäßen Ambossträger (109 angeordnet ist. Figur 6 zeigt eine nähere Seitenansicht auf den erfindungsgemäßen Ambossträger (10) mit dem darauf angeordneten erfindungsgemäßen Amboss (1), wobei zusätzlich die Sonotrode (102) der Ultraschall-Schweißeinrichtung (100) dargestellt ist. Die Figur zeigt ferner die Haupt-Schwingungsrichtung (S) der Sonotrode (102), sowie die Normalkraft (N) und eine durch die Normalkraft (N) bewirkte Rückstellkraft (R), die auf den Amboss (1) wirkt.

Der erfindungsgemäße Ambossträger (10) ist für die Ultraschall-Schweißeinrichtung (100) geeignet und umfasst: eine auf dem Ambossträger (10) ausgebildete Stützfläche (11) zum Stützen eines Ambosses (1) der Ultraschall-Schweißeinrichtung (100); wobei die Stützfläche (11) zwei Abschnitte (11a, 11b) aufweist, wobei die zwei Abschnitte (11a, 11b) zumindest teilweise in einem zwischen den zwei Abschnitten (11a, 11b) liegenden Zwischenraum (12) einen Winkel (β) von mehr als 180° einschließen. Der erfindungsgemäße Ambossträger (10) kann mit jeder beliebigen und beliebig vielen der hier im Folgenden beschriebenen optionalen Merkmale kombiniert werden.

Einer der zwei Abschnitte (11a, 11b) kann ausgelegt sein, den Amboss (1) während des Ultraschall-Schweißens durch die Ultraschall-Schweißeinrichtung (100) zu stützen, oder beide der zwei Abschnitte (11a, 11b) können ausgelegt sein, den Amboss (1) während des Ultraschall-Schweißens durch die Ultraschall-Schweißeinrichtung (100) zu stützen. Mindestens einer der zwei Abschnitte (11a, 11b) kann, während des Ultraschall-Schweißens durch die Ultraschall-Schweißeinrichtung (100), eine der Sonotrode (101) der Ultraschall-Schweißeinrichtung (100) zugewandte Oberfläche des Ambossträgers (10) sein.

Der Zwischenraum (12) liegt entsprechend der Erfindung außerhalb des Ambossträgers (10). Der Zwischenraum (12) kann ausgebildet sein, einen Teil des Ambosses (1) derart zu empfangen, dass eine Auflagerfläche (3) des Ambosses (1) auf der Stützfläche (11) aufliegt.

Der Winkel β kann irgendeinen Wert von 360°-X2° bis 360°-Y2° oder von 360°-X3° bis 360° - Y₃° aufweisen, wobei X2=135°, Y2=95°, X3=95° und Y3=45° dabei gilt.

Einer der zwei Abschnitte (11a, 11b) kann zumindest teilweise geradlinig ausgestaltet sein oder beide der zwei Abschnitte (11a, 11b) können zumindest teilweise geradlinig ausgestaltet sein.

Der Amboss (1) und Ambossträger (10) sind jeweils bevorzugt ausgelegt, zum Ultraschall-Schweißen und (ggf. gleichzeitigem) Schneiden von Metallen, insbesondere zum fluiddichten Ultraschall-Schweißen und (ggf. gleichzeitigem) Abtrennen von Metallrohren, verwendet zu werden.

Nun nehmen wir besonders Bezug auf die schon beschriebenen Figuren 1, 5, und 6, sowie auf Figur 7. Figur 7 zeigt eine dreidimensionale Darstellung des erfindungsgemäßen Ambossträgers (10) und des auf dem Ambossträger (10) angeordneten erfindungsgemäßen Amboss (1), sowie die Normalkraft (N) und eine auf den Amboss (1) wirkende und durch die Normalkraft (N) bewirkte Rückstellkraft (R). Ferner zeigt die Figur ein optionales Befestigungsmittel (8) in Form einer Schraube.

Die in Figur 1 exemplarisch dargestellte erfindungsgemäße Ultraschall-Schweißeinrichtung (100) umfasst: eine Sonotrode (101); irgendeinen der hier beschriebenen erfindungsgemäßen Ambossträger (10); und irgendeinen der hier beschriebenen erfindungsgemäßen Ambosse (1), wobei der Amboss (1) auswechselbar auf dem Ambossträger (10) aufgebracht ist.

Der Amboss (1) kann derart auf dem Ambossträger (10) aufgebracht sein, dass einer der zwei Abschnitte (3a, 3b) der Auflagerfläche (3) des Ambosses (1) auf einem der zwei Abschnitte (11a, 11b) der Stützfläche (11) des Ambossträgers (10) aufliegt und der andere der zwei Abschnitte (3a, 3b) der Auflagerfläche (3) des Ambosses (1) auf dem anderen der zwei Abschnitte (11a, 11b) der Stützfläche (11) des Ambossträgers (10) aufliegt.

Die Ultraschall-Schweißeinrichtung (100) kann derart ausgelegt sein, dass, wenn die Arbeitsfläche (2) des Ambosses (1) während des Ultraschall-Schweißens durch die Ultraschall-Schweißeinrichtung (100) gegen die auf der Sonotrode (101) ausgebildeten Gegenfläche (102) bewegt wird, mittels einer durch die Sonotrode (101) bzw. die Gegenfläche (102) auf die Arbeitsfläche (2) wirkende Normalkraft (N) mindestens einer der zwei Abschnitte (3a, 3b) der Auflagerfläche (3) auf mindestens einen der zwei Abschnitte (11a, 11b) der Stützfläche (11) gedrückt wird.

Der oben beschriebene Winkel (α) des Amboss und/oder der oben beschriebene Winkel (β) des Ambossträgers sind jeweils bevorzugt derart ausgewählt, dass der Amboss (1) auch ohne zusätzliche Befestigungsmittel (8), wie beispielsweise Schrauben, Stifte oder Klammern, mittels der durch die Sonotrode (101) der Ultraschall-Schweißeinrichtung (100) während des Ultraschallschweißens auf den Amboss (1) wirkenden Normalkraft (N) auf der Stützfläche (11) des Ambossträgers (10) während des Ultraschallschweißens fixiert werden kann. Während ein spitzer Winkel (α) eine größere Rückstellkraft (R) aufgrund einer größeren Hangabtriebskraft ermöglicht, wird der Kontaktbereich zwischen Auflagefläche (3) und Stützfläche (11) instabiler. Werte von α < 90° und β > 270° liefern besonders bevorzugte Ergebnisse.

Die Normalkraft (N) kann eine Rückstellkraft (R), wie beispielhaft in Figur 6 dargestellt, bewirken, die einer Relativbewegung zwischen dem Amboss (1) und dem Ambossträger (10) in Haupt-Schwingungsrichtung (S) (hier die Längsrichtung) der Sonotrode (101) entgegenwirkt. Diese Rückstellkraft (R), wie in Figur 6 dargestellt, umfasst eine auf der Stützfläche (11) hangabwärts gerichtete Hangabtriebskraft und/oder eine zwischen Auflagerfläche (3) und Stützfläche (11) wirkende (Gleit- oder Haft-)Reibungskraft. Der Richtungsvektor der Relativbewegung zwischen Amboss (1) und Ambossträger (10) kann parallel zur Haupt-Schwingungsrichtung (S) der Sonotrode (101) verlaufen.

Alternativ oder zusätzlich kann die Normalkraft (N) eine andere Rückstellkraft (R), wie beispielhaft in Figur 7 dargestellt, bewirken, die einer Relativbewegung zwischen dem Amboss (1) und dem Ambossträger (10) senkrecht und/oder transversal zur Haupt-Schwingungsrichtung (S) der Sonotrode (101) entgegenwirkt. Diese Rückstellkraft (R), wie in Figur 7 dargestellt, umfasst eine zwischen Auflagerfläche (3) und Stützfläche (11) wirkende (Gleit- oder Haft-)Reibungskraft. Der Richtungsvektor der Relativbewegung zwischen Amboss (1) und Ambossträger (10) kann transversal zur Haupt-Schwingungsrichtung (S) der Sonotrode (101) verlaufen.

Der Richtungsvektor jeder der beiden Rückstellkräfte (R) gemäß Figuren 6 und 7 kann mindestens eine Komponente enthalten, die senkrecht zum Richtungsvektor der Normalkraft (N) verläuft.

Der Richtungsvektor der Rückstellkraft (R) gemäß Figur 6 kann eine Komponente enthalten, die parallel zum Richtungsvektor der Normalkraft (N) verläuft und/oder eine Komponente, die parallel zur Haupt-Schwingungsrichtung (S) der Sonotrode (101) verläuft.

Der Richtungsvektor jeder der beiden Rückstellkräfte (R) gemäß Figuren 6 und 7 kann mindestens eine Komponente enthalten, die senkrecht (sagittal in Figur 6 und transversal in Figur 7) zur Haupt-Schwingungsrichtung (S) der Sonotrode (101) verläuft.

Die Rückstellkraft (R), wie beispielhaft in Figur 6 gezeigt, kann eine auf der Stützfläche (11) hangabwärts gerichtete Hangabtriebskraft und/oder eine zwischen Auflagerfläche (3) und Stützfläche (11) wirkende (Gleit- oder Haft-)Reibungskraft umfassen. Die andere bzw. weitere Rückstellkraft (R), wie beispielhaft in Figur 7 gezeigt, kann eine zwischen Auflagerfläche (3) und Stützfläche (11) wirkende (Gleit- oder Haft-)Reibungskraft umfassen.

Der Betrag jeder der beiden Rückstellkräfte (R) gemäß Figuren 6 und 7 wird mit zunehmendem Betrag der Normalkraft (N) größer. Wird die Normalkraft (N) durch den Ultraschall-Schweißvorgang größer, etwa weil Sonotrode (102) und Amboss (1) stärker gegeneinander gedrückt werden, so werden sowohl die Hangabtriebskraft-Komponente der Rückstellkraft (R), wie in Figur 6 gezeigt (die Normalkraft (N) hat dabei die Funktion einer Gewichtskraft auf einer schiefen Ebene), also auch die Gleit- und/oder Haft-Reibungskomponente(n) der Rückstellkraft (R), wie in jeder der Figuren 6 und 7 gezeigt, größer.

Bei einem intensiveren Ultraschall-Schweißvorgang, bei dem eine größere Normalkraft bzw. ein größerer Energieübertrag auf den Amboss einwirkt bzw. stattfindet, wird der Amboss mit seiner Auflagerfläche stärker auf die Stützfläche des Ambossträgers gedrückt und stärker hangabwärts auf der sich durch die oben beschriebenen Winkel ergebenden Neigung bzw. schiefen Ebene gedrückt. Wie beispielhaft in den Figuren 1, 5, 6 und 7 für Winkel von etwa α = 90° und β = 270° dargestellt, bildet der erste Abschnitt (11a) der Stützfläche (11) des Ambossträgers (10) eine solche Neigung bzw. schiefe Ebene entlang der der Amboss (10) mit seinem komplementären bzw. angrenzenden und berührenden ersten Abschnitt (3a) der Auflagerfläche bei einer auf die Arbeitsfläche (2) wirkende Normalkraft (N) hangabwärts entlang der Neigung bzw. schiefen Ebene durch eine durch die Normalkraft (N) bewirkten Hangabtriebskraft bewegt wird. Je größer die Normalkraft (N), zum Beispiel durch einen intensiveren Ultraschall-Schweißvorgang, umso größer ist diese Hangabtriebskraft und umso mehr wird einer Relativbewegung des Amboss (1) in Haupt-Schwingungsrichtung (S) der Sonotrode (102) weg von dem Ambossträger (10) entgegenwirkt. Mit größer werdender Normalkraft (N) werden auch die oben beschriebenen Reibungskräfte, die zwischen Auflagerfläche (3) und Stützfläche (11) auftreten, für die Rückstellkräfte (R), wie in den Figuren 6 und 7 dargestellt, erhöht.

Die hier beschriebenen vorteilhaften technischen Effekte werden insbesondere dann erzielt, wenn die oben beschriebene Neigung bzw. schiefe Ebene an der Schnittstelle zwischen Stützfläche (11) und Auflagerfläche (3) gebildet werden kann, was durch relative Anordnung der Abschnitte (11a, 11b) der Stützfläche (11) und der Abschnitte (3a, 3b) der Auflagerfläche (3) jeweils untereinander und zueinander möglich ist. Eine solche Neigung bzw. schiefe Ebene ist regelmäßig dann gegeben, wenn α < 180° und β > 180°.

Eine Frontalfläche (13) des Ambossträgers (10), die in Haupt-Schwingungsrichtung (S) der Sonotrode (102) schaut, und einer der Abschnitte (11a) der Stützfläche (11) bilden in einem Teil des Zwischenraums (12) eine Kerbe (14) in die der Amboss (1) mit einem Abschnitt (3a) seiner Auflagefläche (3) aufgrund der Hangabtriebskraft runterrutscht bzw. zurückrutscht, wenn die Normalkraft (N) auf seine Arbeitsfläche (2) einwirkt.

Die oben beschriebenen speziellen Ausgestaltungen des erfindungsgemäßen Ambosses (1) und Ambossträgers (10) führen somit zu einer Selbstfixierung des Amboss (1) auf dem Ambossträger (10) während eines Ultraschall-Schweißvorgangs.

Besonders bevorzugte Ausführungsformen dieser Erfindung weisen auf ein oder mehreren der Abschnitte der Auflagerfläche (3) und/oder der Stützfläche (11) Oberflächenstrukturen auf, die die zwischen Auflagerfläche und Stützfläche wirkende Reibung, und somit auch die oben beschriebene selbstfixierende Wirkung, erhöhen.

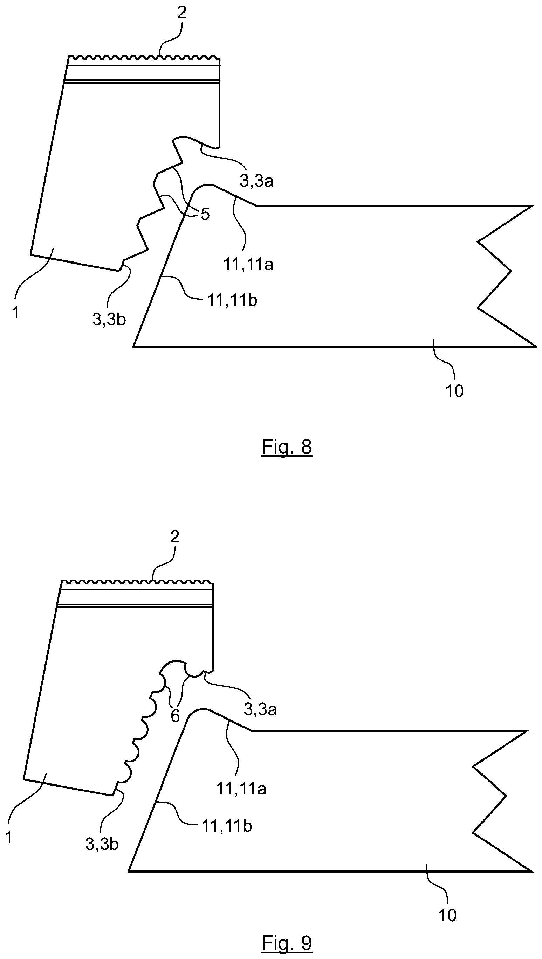

Figur 8 zeigt eine seitliche Nahaufnahme eines erfindungsgemäßen Ambossträgers (10) und eines erfindungsgemäßen Ambosses (1), wobei der Amboss auf der Auflagerfläche eine Oberflächenstruktur aufweist.

Die Oberfläche einer (hier in Figur 8 beispielhaft der zweite Abschnitt 3b) der zwei Abschnitte (3a, 3b) kann, wie beispielhaft in Figur 8 gezeigt, mit abstehenden Zacken (5) (beispielsweise einer periodischen Abfolge von solchen Zacken) ausgestaltet sein. Alternativ kann die Oberfläche jeder der zwei Abschnitte (3a, 3b) mit solchen abstehenden Zacken (5) (beispielsweise einer periodischen Abfolge von solchen Zacken) ausgestaltet sein.

Figur 9 zeigt eine seitliche Nahaufnahme eines erfindungsgemäßen Ambossträgers (10) und eines erfindungsgemäßen Ambosses (1), wobei der Amboss auf der Auflagerfläche eine andere Oberflächenstruktur aufweist.

Die Oberfläche einer der zwei Abschnitte (3a, 3b) kann, wie beispielhaft in Figur 9 gezeigt, mit einer abstehenden Wellenstruktur, beispielsweise umfassend eine periodische Abfolge von Wellenbergen (6), ausgestaltet sein. Alternativ kann, wie beispielhaft in Figur 9 gezeigt, die Oberfläche jeder der zwei Abschnitte (3a, 3b) mit einer solchen Wellenstruktur, beispielsweise umfassend eine periodische Abfolge von Wellenbergen (6), ausgestaltet sein. Im Falle von komplementären Oberflächenstrukturen (in Figuren 8 und 9 der Übersichtlichkeit halber hier nicht gezeigt) auf aneinander angrenzenden und sich berührenden Abschnitten (3a und 11a oder 3b und 11b) der Auflagerfläche (3) und der Stützfläche (11) ist zudem ein Formschluss zwischen Auflagerfläche (3) und Stützfläche (11), und damit zwischen Amboss (1) und Ambossträger (10), möglich.

Diese optionalen zusätzlichen Merkmale dieser besonders bevorzugten Ausführungsformen verringern durch erhöhte Reibung oder sogar Formschluss zusätzlich die oben beschriebenen Relativbewegungen zwischen Amboss (1) und Ambossträger (10) parallel zur Haupt-Schwingungsrichtung (S) der Sonotrode (102) und/oder transversal zur Haupt-Schwingungsrichtung (S) der Sonotrode (102).

## Patentansprüche

1. Ein Amboss (1) für eine Ultraschall-Schweißeinrichtung (100), der Amboss (1) umfassend:
eine auf dem Amboss (1) ausgebildete Arbeitsfläche (2) zum Aufliegen eines mittels Ultraschallschwingungen zu schweißenden Objekts; und
eine an dem Amboss (1) ausgebildete Auflagerfläche (3);
wobei die Auflagerfläche (3) zwei Abschnitte (3a, 3b) zum Aufliegen des Amboss (1) auf einer auf einem Ambossträger (10) ausgebildeten Stützfläche (11) aufweist,
wobei die zwei Abschnitte (3a, 3b) zumindest teilweise in einem zwischen den zwei Abschnitten liegenden Zwischenraum (4) einen Winkel (α) von weniger als 180° einschließen, und
wobei der Zwischenraum (4) außerhalb des Amboss (1) liegt;
**dadurch gekennzeichnet, dass**
der Winkel (α) irgendeinen Wert von 135° bis 95° oder 95° bis 45° aufweist.

2. Der Amboss (1) nach Anspruch 1, **dadurch gekennzeichnet, dass** der Zwischenraum (4) ausgebildet ist, einen Teil des Ambossträgers (10) und dessen Stützfläche (11) zu empfangen.

3. Der Amboss (1) nach irgendeinem der vorangehenden Ansprüche, **dadurch gekennzeichnet, dass** bei einem intensiveren Ultraschall-Schweißvorgang, bei dem eine größere Normalkraft auf den Amboss einwirkt der Amboss mit seiner Auflagerfläche stärker auf die Stützfläche des Ambossträgers gedrückt und stärker hangabwärts auf der sich durch die oben beschriebenen Winkel ergebenden schiefen Ebene gedrückt wird.

4. Der Amboss (1) nach irgendeinem der vorangehenden Ansprüche, **dadurch gekennzeichnet, dass** die Oberfläche einer der zwei Abschnitte (3a, 3b) mit abstehenden Zacken (5) oder einer abstehenden Wellenstruktur (6) ausgestaltet ist, oder, dass die Oberfläche jeder der zwei Abschnitte (3a, 3b) mit abstehenden Zacken (5) oder einer abstehenden Wellenstruktur (6) ausgestaltet ist.

5. Ein Ambossträger (10) für eine Ultraschall-Schweißeinrichtung (100), der Ambossträger (10) umfassend:
eine auf dem Ambossträger (10) ausgebildete Stützfläche (11) zum Stützen eines Ambosses (1) der Ultraschall-Schweißeinrichtung (100);
wobei die Stützfläche (11) zwei Abschnitte (11a, 11b) aufweist,
wobei die zwei Abschnitte (11a, 11b) zumindest teilweise in einem zwischen den zwei Abschnitten (11a, 11b) liegenden Zwischenraum (12) einen Winkel (β) von mehr als 180° einschließen, und
wobei der Zwischenraum (12) außerhalb des Ambossträgers (10) liegt;
**dadurch gekennzeichnet, dass**
der Winkel (β) irgendeinen Wert von 225° bis 265° oder 265° bis 315° aufweist.

6. Der Ambossträger (10) nach Anspruch 5, **dadurch gekennzeichnet, dass** einer der zwei Abschnitte (11a, 11b) ausgelegt ist, den Amboss (1) während des UltraschallSchweißens durch die Ultraschall-Schweißeinrichtung (100) zu stützen, oder dass beide der zwei Abschnitte (11a, 11b) ausgelegt sind den Amboss (1) während des Ultraschall-Schweißens durch die Ultraschall-Schweißeinrichtung (100) zu stützen.

7. Der Ambossträger (10) nach irgendeinem der vorangehenden Ansprüche 5 bis 6, **dadurch gekennzeichnet, dass** der Zwischenraum (12) ausgebildet ist, einen Teil des Ambosses (1) derart zu empfangen, dass eine Auflagerfläche (3) des Ambosses (1) auf der Stützfläche (11) aufliegt.

8. Der Ambossträger (10) nach irgendeinem der vorangehenden Ansprüche 5 bis 7, **dadurch gekennzeichnet, dass** der erste Abschnitt (IIa) der Stützfläche (11) des Ambossträgers (10) eine schiefe Ebene bildet, entlang der der Amboss (10) mit seinem komplementären und berührenden ersten Abschnitt (3a) der Auflagerfläche bei einer auf die Arbeitsfläche (2) wirkende Normalkraft (N) hangabwärts entlang der schiefen Ebene durch eine durch die Normalkraft (N) bewirkten Hangabtriebskraft bewegt wird.

9. Der Ambossträger (10) nach irgendeinem der vorangehenden Ansprüche 5 bis 8, **dadurch gekennzeichnet, dass** die Oberfläche einer der zwei Abschnitte mit abstehenden Zacken (5) oder einer abstehenden Wellenstruktur (6) ausgestaltet ist oder, dass die Oberfläche jeder der zwei Abschnitte mit abstehenden Zacken (5) oder einer abstehenden Wellenstruktur (6) ausgestaltet ist.

10. Der Amboss (1) oder der Ambossträger (10) nach irgendeinem der vorangehenden Ansprüche, **dadurch gekennzeichnet, dass** der Winkel (α β) derart gewählt ist, dass der Amboss (1) auch ohne zusätzliche Befestigungsmittel, wie beispielsweise Schrauben, Stifte oder Klammern, mittels der durch die Sonotrode (101) der Ultraschall-Schweißeinrichtung (100) während des Ultraschallschweißens auf den Amboss (1) wirkenden Normalkraft (N) auf der Stützfläche (11) des Ambossträgers (10) fixiert werden kann.

11. Eine Ultraschall-Schweißeinrichtung (100) umfassend:
eine Sonotrode (101);
**gekennzeichnet durch**:
den Ambossträger (10) nach irgendeinen der Ansprüche 5 bis 10; und
den Amboss (1) nach irgendeinen der Ansprüche 1 bis 4 oder 10, wobei der Amboss (1) auswechselbar auf dem Ambossträger (10) aufgebracht ist.

12. Die Ultraschall-Schweißeinrichtung (100) nach Anspruch 11, wobei der Amboss (1) derart auf dem Ambossträger (10) aufgebracht ist, dass einer der zwei Abschnitte (3a, 3b) der Auflagerfläche (3) des Ambosses (1) auf einem der zwei Abschnitte (11a, 11b) der Stützfläche (11) des Ambossträgers (10) aufliegt und der andere der zwei Abschnitte (3a, 3b) der Auflagerfläche (3) des Ambosses (1) auf dem anderen der zwei Abschnitte (11a, 11b) der Stützfläche (11) des Ambossträgers (10) aufliegt.

13. Die Ultraschall-Schweißeinrichtung (100) nach einem der Ansprüche 11 bis 12, wobei die Ultraschall-Schweißeinrichtung (100) derart ausgelegt ist, dass, wenn die Arbeitsfläche (2) des Ambosses (1) während des Ultraschall-Schweißens durch die Ultraschall-Schweißeinrichtung (100) gegen eine auf der Sonotrode (101) ausgebildeten Gegenfläche (102) bewegt wird, mittels einer durch die Sonotrode (101) auf die Arbeitsfläche (2) wirkende Normalkraft (N) mindestens einer der zwei Abschnitte (3a, 3b) der Auflagerfläche (3) auf mindestens einen der zwei Abschnitte (11a, 11b) der Stützfläche (11) gedrückt wird.

14. Die Ultraschall-Schweißeinrichtung (100) nach Anspruch 13, wobei die Normalkraft (N) eine oder mehrere Rückstellkräfte (R) bewirkt, die einer Relativbewegung zwischen dem Amboss (1) und dem Ambossträger (10) in Haupt-Schwingungsrichtung (S) der Sonotrode (101) und/oder transversal zur Haupt-Schwingungsrichtung (S) der Sonotrode (101) entgegenwirken.

15. Die Ultraschall-Schweißeinrichtung (100) nach Ansprüche 14, wobei der Betrag der ein oder mehreren Rückstellkräfte (R) mit zunehmendem Betrag der Normalkraft (N) größer wird und/oder wobei eine der ein oder mehreren Rückstellkräfte (R) eine auf der Stützfläche (11) hangabwärts gerichtete Hangabtriebskraft umfasst und/oder wobei die ein oder mehreren Rückstellkräfte (R) eine zwischen Auflagerfläche (3) und Stützfläche (11) wirkende Reibungskraft umfassen.

## Claims

1. An anvil (1) for an ultrasound welding device (100), the anvil (1) comprising:
a working surface (2) formed on the anvil for seating an object to be welded by means of ultrasonic vibrations; and
a seating surface (3) formed on the anvil (1);
wherein the seating surface (3) comprises two sections (3a, 3b) for seating the anvil (1) on a supporting surface (11) formed on an anvil support (10),
wherein the two sections (3a, 3b) at least partially enclose an angle (α) of less than 180° in an intermediate space (4) lying between the two sections, and
wherein the intermediate space (4) lies outside the anvil (1) ;
**characterised in that**
the angle (α) has any value from 135° to 95° or 95° to 45°.

2. The anvil (1) according to claim 1, **characterised in that** the intermediate space (4) is designed to receive a part of the anvil support (10) and its supporting surface (11).

3. The anvil (1) according to any one of the preceding claims, **characterised in that**, in a more intensive ultrasonic welding process in which a greater normal force acts on the anvil, the anvil pushes more intensely with its seating surface on the supporting surface of the anvil support and is pushed more intensely downwards on the oblique plane resulting from the angles described above.

4. The anvil (1) according to any one of the preceding claims, **characterised in that** the surface of one of the two sections (3a, 3b) if is constituted with projecting jags (5) or a projecting wave structure (6), or that the surface of each of the two sections (3a, 3b) is constituted with projecting jags (5) or a projecting wave structure (6).

5. An anvil support (10) for an ultrasonic welding device (100), the anvil support (10) comprising: a supporting surface (11) formed on the anvil support (10) for supporting an anvil (1) of the ultrasonic welding device (100);
wherein the supporting surface (11) comprises two sections (11a, 11b),
wherein the two sections (11a, 11b) at least partially enclose an angle (β) of more than 180° in an intermediate space (12) lying between the two sections (11a, 11b), and
wherein the intermediate space (12) lies outside the anvil support (10);
**characterised in that**
the angle (β) has any value from 225° to 265° or 265° to 315°.

6. The anvil support (10) according to claim 5, **characterised in that** one of the two sections (11a, 11b) is designed to support the anvil (1) during the ultrasonic welding by means of the ultrasonic welding device (100), or that both of the two sections (11a, 11b) are designed to support the anvil (1) during the ultrasonic welding by means of the ultrasonic welding device (100).

7. The anvil support (10) according to any one of preceding claims 5 to 6, **characterised in that** the intermediate space (12) is designed to receive a part of the anvil (1) in such a way that the seating surface (3) of the anvil (1) lies on the supporting surface (11).

8. The anvil support (10) according to any one of preceding claims 5 to 7, **characterised in that** the first section (11a) of the supporting surface (11) of the anvil support (10) forms on oblique plane, along which the anvil (10) is moved with its complementary and contacting first section (3a) of the seating surface, in the presence of a normal force (N) acting on the working surface (2), downwards along the oblique plane due to a downforce brought about by the normal force (N).

9. The anvil support (10) according to any one of preceding claims 5 to 8, **characterised in that** the surface of one of the two sections is designed with projecting jags (5) or a projecting wave structure (6) or that the surface of each of the two sections is designed with projecting jags (5) or a projecting wave structure (6).

10. The anvil (1) or the anvil support (10) according to any one of the preceding claims, **characterised in that** the angle (α β) is selected such that the anvil (1) can be fixed on the supporting surface (11) of the anvil support (10) by means of the normal force (N) acting on anvil (1) due to the sonotode (101) of the ultrasonic welding device (100) during the ultrasonic welding, even without additional fixing means, such as for example screws, pins or clamps.

11. An ultrasonic welding device (100) comprising:
a sonotrode (101);
**characterised by**
the anvil support (10) according to any one of claims 5 to 10; and the anvil (1) according to any one of claims 1 to 4 or 10, wherein the anvil (1) is exchangeably arranged on the anvil support (10).

12. The ultrasonic welding device (100) according to claim 11, wherein the anvil (1) is fitted on the anvil support (10), in such a way that one of the two sections (3a, 3b) of the seating surface (3) of the anvil (1) lies on one of the two sections (11a, 11b) of the supporting surface (11) of the anvil support (10) and the other of the two sections (3a, 3b) of the seating surface (3) of the anvil (1) lies on the other of the two sections (11a, 11b) of the supporting surface (11) of the anvil support (10).

13. The ultrasonic welding device (100) according to any one of claims 11 to 12, wherein the ultrasonic welding device (100) is designed such that, when the working surface (2) of the anvil (1) is moved against a counterface (102) formed on the sonotrode (101) during the ultrasonic welding by means of the ultrasonic welding device (100), at least one of the two sections (3a, 3b) of the seating surface (3) is pushed on at least one of the two sections (11a, 11b) of the supporting surface (11) by means of a normal force (N) acting through the sonotrode (101) on the working surface (2).

14. The ultrasonic welding device (100) according to claim 13, wherein the normal force (N) brings about one or more restoring forces (R), which counteract a relative motion between the anvil (1) and the anvil support (10) in the main vibration direction (S) of the sonotrode (101) and/or transversely to the main vibration direction (S) of the sonotrode (101).

15. The ultrasonic welding device (100) according to claim 14, wherein the amount of the one or more restoring forces (R) becomes greater with an increasing amount of the normal force (N) and/or wherein one of the one or more restoring forces (R) comprises a downward force directed onto the supporting surface (11) and/or wherein the one or more restoring forces (R) include a frictional force acting between the seating surface (3) and the supporting surface (11).

## Revendications

1. Enclume (1) pour un dispositif de soudure par ultrasons (100), cette enclume (1) comprenant :
une surface de travail (2) réalisée sur l'enclume (1), pour la pose d'un objet à souder au moyen de vibrations ultrasonores ; et
une surface de pose (3) réalisée sur l'enclume (1) ;
dans lequel la surface de pose (3) comprend deux portions (3a, 3b) pour la pose de l'enclume (1) sur une surface d'appui (11) réalisée sur un support d'enclume (10),
dans lequel les deux portions (3a, 3b) forment, au moins partiellement dans un espace intermédiaire (4) se trouvant entre les deux portions, un angle (α) inférieur à 180° et
dans lequel l'espace intermédiaire (4) se trouve à l'extérieur de l'enclume (1) ;
**caractérisé en ce que**
l'angle (α) présente n'importe quelle valeur de 135° à 95° ou de 95° à 45°.

2. Enclume (1) selon la revendication 1, **caractérisée en ce que** l'espace intermédiaire (4) est conçu pour recevoir une partie du support d'enclume (10) ou de sa surface d'appui (11).

3. Enclume (1) selon l'une des revendications précédentes, **caractérisée en ce que**, lors d'un processus de soudure par ultrasons, dans lequel une force normale supérieure agit sur l'enclume, l'enclume est comprimée, avec sa surface de pose, plus fortement sur la surface d'appui du support d'enclume et est comprimée plus fortement dans le sens de la pente sur le plan oblique résultant des angles mentionnés ci-dessus.

4. Enclume (1) selon l'une des revendications précédentes, **caractérisée en ce que** la surface d'une des deux surfaces (3a, 3b) est conçue avec des dents en saillie (5) ou une structure ondulée en saillie (6) ou **en ce que** la surface de chacune des deux portions (3a, 3b) est munie de dents en saillie (5) ou d'une structure ondulée en saillie (6).

5. Support d'enclume (10) pour un dispositif de soudure par ultrasons (100), ce support d'enclume (10) comprenant :
une surface d'appui (11) réalisée sur le support d'enclume (10) pour l'appui d'une enclume (1) du dispositif de soudure par ultrasons (100) ;
dans lequel la surface d'appui (11) comprend deux portions (11a, 11b),
dans lequel les deux portions (11a, 11b) forment, au moins partiellement dans un espace intermédiaire (12) se trouvant entre les deux portions (11a, 11b), un angle (β) supérieur à 180° et
dans lequel l'espace intermédiaire (12) se trouve à l'extérieur du support d'enclume (10) ;
**caractérisé en ce que**
l'angle (β) présente n'importe quelle valeur de 225° à 265° ou de 265° à 315°.

6. Support d'enclume (10) selon la revendication 5, **caractérisé en ce qu'**une des deux portions (11a, 11b) est conçue pour soutenir l'enclume (1) pendant la soudure par ultrasons à l'aide du dispositif de soudure par ultrasons (100) ou **en ce que** les deux portions (11a, 11b) sont conçues pour soutenir le l'enclume (1) pendant la soudure par ultrasons à l'aide du dispositif de soudure par ultrasons (100).

7. Support d'enclume (10) selon l'une des revendications précédentes 5 à 6, **caractérisé en ce que** l'espace intermédiaire (12) est conçu pour recevoir une partie de l'enclume (1) de façon à ce qu'une surface de pose (3) de l'enclume (1) repose sur la surface d'appui (11).

8. Support d'enclume (10) selon l'une des revendications précédentes 5 à 7, **caractérisé en ce que** la première portion (IIa) de la surface d'appui (11) du support d'enclume (10) forme un plan oblique le long duquel l'enclume (10) est déplacée, avec sa première portion (3a) complémentaire et en contact avec la surface de pose lorsqu'une force normale (N) qui agit sur la surface de travail (2) dans le sens de la pente le long du plan oblique par une force d'entraînement dans la pente, provoquée par la force normale (N).

9. Support d'enclume (10) selon l'une des revendications précédentes 5 à 8, **caractérisé en ce que** la surface d'une des deux portions est munie de dents en saillie (5) ou d'une structure ondulée en saillie (6) ou **en ce que** la surface de chacune des deux portions est munie de dents en saillie (5) ou d'une structure ondulée en saillie (6).

10. Enclume (1) ou support d'enclume (10) selon l'une des revendications précédentes, **caractérisée en ce que** l'angle (α β) est choisi de façon à ce que l'enclume (1) puisse être fixée sans aucun moyen de fixation supplémentaire, par exemple des vis, des goupilles ou des agrafes, au moyen de la force normale (N) agissant par l'intermédiaire de la sonotrode (101) du dispositif de soudure par ultrasons (100) pendant la soudure par ultrasons sur l'enclume (1), sur la surface d'appui (11) du support d'enclume (10).

11. Dispositif de soudure par ultrasons (100) comprenant :
une sonotrode (101) ;
**caractérisé par** :
le support d'enclume (10) selon l'une des revendications 5 à 10 ; et
l'enclume (1) selon l'une des revendications 1 à 4 ou 10, dans lequel l'enclume (1) est appliquée de manière interchangeable sur le support d'enclume (10).

12. Dispositif de soudure par ultrasons (100) selon la revendication 11, dans lequel l'enclume (1) est appliquée sur le support d'enclume (10) de façon à ce qu'une des deux portions (3a, 3b) de la surface de pose (3) de l'enclume (1) repose sur une des deux portions (11a, 11b) de la surface d'appui (11) du support d'enclume (10) et l'autre des deux portions (3a, 3b) de la surface de pose (3) de l'enclume (1) repose sur l'autre des deux portions (11a, 11b) de la surface d'appui (11) du support d'enclume (10).

13. Dispositif de soudure par ultrasons (100) selon l'une des revendications 11 à 12, dans lequel le dispositif de soudure par ultrasons (100) est conçu de façon à ce que, lorsque la surface de travail (2) de l'enclume (1) est déplacée, pendant la soudure par ultrasons, à travers le dispositif de soudure par ultrasons (100), contre une contre-surface (102) réalisé sur la sonotrode (101), au moins un des deux portions (3a, 3b) de la surface de pose (3) est comprimée, au moyen d'une force normale (N) exercée par la sonotrode (101) sur la surface de travail (2), sur au moins une des deux portions (11a, 11b) de la surface d'appui (11).

14. Dispositif de soudure par ultrasons (100) selon la revendication 13, dans lequel la force normale (N) produit une ou plusieurs forces de rappel (R) qui vont à l'encontre d'un mouvement relatif entre l'enclume (1) et le support d'enclume (10) dans la direction principale des vibrations (S) de la sonotrode (101) et/ou transversalement par rapport à la direction principale des vibrations (S) de la sonotrode (101).

15. Dispositif de soudure par ultrasons (100) selon la revendication 14, dans lequel la valeur des une ou plusieurs forces de rappel (R) augmente lorsque la valeur de la force normale (N) augmente et/ou dans lequel une des une ou plusieurs forces de rappel (R) comprend une force suivant la pente sur la surface d'appui (11) et/ou dans lequel la ou les forces de rappel (R) comprennent une force de frottement agissant entre la surface de pose (3) et la surface d'appui (11).
